# EUROPÄISCHE PATENTSCHRIFT

(11) **EP 1 331 794 B1**
(45) Veröffentlichungstag und Bekanntmachung des Hinweises auf die Patenterteilung: **05.03.2008**
(21) Anmeldenummer: 02025898.4
(22) Anmeldetag: 20.11.2002
(51) Int. Cl.: H04L 29/12

(54) **Verfahren zur Adresszuweisung in einem Netzwerk und Komponenten dafür**
Method for address allocation in a network and components therefore
Procédé d'attribution d'adresses dans un réseau et ses composants

(30) Priorität: 24.01.2002 DE 10202851
(43) Veröffentlichungstag der Anmeldung: 30.07.2003
(73) Patentinhaber: VEGA Grieshaber KG, 77709 Wolfach (DE)
(72) Erfinder: Schätzle, Rolf, 77716 Fischerbach (DE)
(74) Vertreter: Patentanwälte Westphal, Mussgnug & Partner

(56) Entgegenhaltungen:
- WO-A-99/08164
- DE-A1- 19 621 272
- US-A- 5 502 438
- US-A- 5 636 342

## Beschreibung

Die vorliegende Erfindung betrifft ein Verfahren zur automatischen Zuweisung wenigstens einer Slave-Adresse in einem Datenverarbeitungsnetzwerk mit einem Master-Gerät und wenigstens einem Slave-Gerät.

Geräteadressen müssen in einem Netzwerk eindeutig vergeben sein, damit die einzelnen Geräte gezielt angesprochen werden können. Die manuelle Vergabe solcher Adressen, z.B. durch Einstellen von Schaltern an den einzelnen Geräten, ist ausgesprochen zeitaufwendig und fehlerträchtig, da ein einziger falsch eingestellter Schalter genügen kann, um ein Netzwerk außer Betrieb zu setzen, und die Ursache des Fehlers dann häufig nicht unmittelbar erkennbar ist. Außerdem ist es beschwerlich, bei allen Geräten, die zu einem Netzwerk gehören und die mitunter weit voneinander entfernt sein können, auf die Schalter zuzugreifen, um sie einzustellen.

Aus der US 5,502,438 ist ein Verfahren bekannt, bei dem aus einer einem Slave-Gerät eindeutig zugeordneten Seriennummer eine Suchadresse errechnet wird, ein Master-Gerät einen Bereich von Suchadressen abgefragt und dieser Bereich solange verkleinert wird, bis nur noch eine Antwort empfangen wird. Dem einzelnen Slave-Gerät wird dann eine Netzwerk-Adresse zugewiesen, die sich von der Suchadresse unterscheidet.

Aus der US 5,636,342 ist des Weiteren ein Verfahren bekannt, bei dem mehreren Slave-Geräten von einem Master-Gerät eine Adresse zugewiesen wird, das Master-Gerät die Adress-Informationen abfragt und die Slave-Geräte einen Fehler detektieren, wenn mehrere Geräte mit der gleichen Adresse antworten. Bei Detektion eines Fehlers wechseln die Slave-Geräte auf eine vorher gültige Klassen-Adresse zurück.

Aufgabe der Erfindung ist, Komponenten für ein DV-Netzwerk und ein Verfahren zur automatischen Adresszuweisung in einem DV-Netzwerk anzugeben, die die oben geschilderten Mängel einer manuellen Adresszuweisung vermeiden, d.h. die eine schnelle und fehlerfreie Adresszuweisung gewährleisten.

Das erfindungsgemäße Verfahren nach Anspruch 1 wird von einem Master-Gerät nach Anspruch 9 eines DV-Netzwerks nach Anspruch 10 ausgeführt, es setzt zu seiner Ausführbarkeit ein Slave-Gerät voraus, dessen Adresse in dem DV-Netzwerk durch einen über das DV-Netzwerk an das Slave-Gerät gerichteten Adresseinstellbefehl einstellbar ist und das eingerichtet ist, den Wert einer ihm eigenen Eigenschaft mit einem in dem Adresseinstellbefehl angegebenen Wertebereich dieser Eigenschaft zu vergleichen und in Abhängigkeit vom Ergebnis des Vergleichs den Adresseinstellbefehl auszuführen oder nicht auszuführen.

Für das erfindungsgemäße Verfahren des Anspruchs 1 muss die oben erwähnte Eigenschaft der Slave-Geräte für jedes Slave-Gerät des DV-Netzwerks, auf das das Verfahren angewendet wird, einen anderen Wert aus einer endlichen Wertemenge aufweisen. Das Verfahren hat die Schritte (a)-(e) des Anspruchs 1.

Durch die rekursive Rückkehr zum Schritt c) werden die Teilmengen im Laufe des Verfahrensablaufs immer kleiner, bis schließlich in jedem Fall einelementige Teilmengen erhalten werden, so dass das Verfahren in jedem Falle einen Abschluss findet.

Die abhängigen Ansprüche 2-7 beschreiben weitere Ausgestaltungen des Verfahrens.

Einer bevorzugten Ausgestaltung des Verfahrens zufolge sind die erste und die zweite Adresse, die in Schritt b) den Teilmengen zugewiesen werden, temporäre Adressen, und wenn im Schritt d) die erste Teilmenge oder in Schritt e) die zweite Teilmenge genau ein Element enthält, wird dem Slave-Gerät, bei dem der Wert der individualisierenden Eigenschaft diesem Element entspricht, eine endgültige Adresse zugewiesen.

Bei einer besonders einfachen Ausgestaltung des Verfahrens werden bei jeder Wiederholung von Schritt c) identische Werte der ersten und der zweiten Adresse verwendet.

Alternativ besteht die Möglichkeit, bei jeder Wiederholung von Schritt d) oder e) wenigstens einen Wert für die erste und/oder die zweite Adresse neu einzuführen, der bislang keinem Element der Such-Wertemenge zugeordnet ist. Diese Vorgehensweise erhöht zwar die Zahl der an die Elemente der Such-Wertemenge verteilten Adressen, er erlaubt aber eine Beschleunigung des Verfahrens.

Wenn bei dieser alternativen Ausgestaltung in Schritt c) die erste Teilmenge ein Element enthält, wird vorzugsweise ferner überprüft, ob wenigstens ein Slave existiert, der mit der zweiten Adresse adressierbar ist. Wenn dies der Fall ist, und wenn die zweite Teilmenge nur ein Element enthält, so bedeutet dies, dass ein Slave-Gerät gefunden worden ist, bei dem der Wert der individualisierenden Eigenschaft dem Element der zweiten Teilmenge entspricht, und dem die zweite Adresse zugeteilt worden ist; wenn die zweite Teilmenge mehr als ein Element enthält, wird die zweite Teilmenge als Such-Wertemenge gesetzt und das Verfahren kehrt zurück zu Schritt b).

Wenn mehrere Slave-Adressen zuzuweisen sind, ist es zweckmäßig, dass, wenn die Überprüfung in Schritt c) ergibt, dass kein Slave mit der ersten Adresse adressierbar ist, die Elemente der ersten Teilmenge aus der endlichen Wertemenge gestrichen werden. Die Folge dieser Maßnahme ist nämlich, dass, wenn zum Zuweisen einer weiteren Adresse der Schritt a) wiederholt wird, die Such-Wertemenge verkleinert ist, so dass die Zuteilung einer Adresse eventuell eine geringere Zahl von Unterteilungen der Such-Wertemenge erfordert.

In gleicher Weise kann auch jedes Element der endlichen Wertemenge, zu dem ein Slave-Gerät gefunden worden ist, aus der endlichen Wertemenge gestrichen werden.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: ein Flussdiagramm einer ersten Ausgestaltung des erfindungsgemäßen Verfahrens;
- Fig. 2: die Abfolge von Befehlen, die das Master-Gerät zur Durchführung des Verfahrens von Fig. 1 an die Slave-Geräte sendet, sowie die Auswirkungen dieser Befehle;
- Fig. 3: eine Abwandlung des Flussdiagramms aus Fig. 1;
- Fig. 4,: analog zu Fig. 2, die Folge der gemäß dem Flussdiagramm von Fig. 3 gesendeten Befehle und ihrer Auswirkungen;
- Fig. 5: eine Befehlsfolge gemäß einer Abwandlung des mit Bezug auf Figs. 3 und 4 beschriebenen Verfahrens;
- Fig. 6: ein Flussdiagramm eines Verfahrens, bei dem mehr als zwei Adressen gleichzeitig verwendet werden; und
- Fig. 7: ein Beispiel der Befehlsfolge und deren Auswirkungen gemäß dem Verfahren von Fig. 6.

Das im folgenden zu beschreibende Verfahren ist ausführbar in einem beliebigen Datenverarbeitungssystem mit einem Master-Gerät und einem oder mehreren Slave-Geräten, bei dem das Master-Gerät in der Lage ist, einen Adressen-Zuweisungsbefehl an die Slave-Geräte zu senden, der zusätzlich zu einer zuzuweisenden Adresse wenigstens einen begleitenden Parameterwert enthält, und wobei das wenigstens eine Slave-Gerät in der Lage ist, anhand eines Vergleichs dieses wenigstens einen Parameterwertes mit einer eigenen Eigenschaft zu entscheiden, ob es den Adressen-Zuweisungsbefehl ausführt oder nicht. Die Eigenschaft kann eine beliebige Eigenschaft sein, die eine endliche Zahl von Werten annehmen kann, wobei sichergestellt sein muss, dass keine zwei Slave-Geräte des DV-Netzwerks den gleichen Wert dieser Eigenschaft aufweisen. Die Eigenschaft kann z.B. eine Seriennummer der Slave-Geräte oder ihrer Netzwerkschnittstellen sein.

Das DV-Netzwerk kann eine beliebige, herkömmliche Struktur haben, die an dieser Stelle zu beschreiben nicht erforderlich ist.

Zur Initialisierung des Verfahrens ist es erforderlich, dass das Master-Gerät die möglichen Werte kennt, die die betreffende Eigenschaft der Slave-Geräte haben kann. Diese Kenntnis kann sich z.B. aus einer Konvention der Hersteller der Slave-Geräte ergeben, dass für die Eigenschaft nur diskrete Werte innerhalb eines vorgegebenen Intervalls verwendet werden, oder eine Bedienungsperson kann die Grenzen eines solchen Intervalls oder eine Aufzählung möglicher Werte der Eigenschaft in das Master-Gerät eingeben.

Im Extremfall ist es nicht einmal erforderlich, dass eine solche Bedienungsperson die nötigen Werte der Eigenschaft mit Sicherheit kennt; sie kann sich darauf beschränken, ein Werteintervall zu raten und nach Durchführung des Verfahrens zu überprüfen, ob allen Slave-Geräten eine Adresse zugewiesen worden ist, und, wenn dies nicht der Fall ist, das Verfahren für ein weiteres geratenes Intervall zu wiederholen.

Diese Aufzählung oder dieses Intervall möglicher Werte der Eigenschaft wird im folgenden als die "endliche Wertemenge" bezeichnet. In den folgenden Beispielen wird als endliche Wertemenge die Menge der ganzen Zahlen zwischen 0 und 15 herangezogen, und es wird angenommen, dass Slave-Geräte vorhanden sind, deren individualisierende Eigenschaft jeweils den Wert 2, 3, 9 bzw. 15 aufweist. Die Verallgemeinerung auf andere Wertemengen und Werte ist offensichtlich.

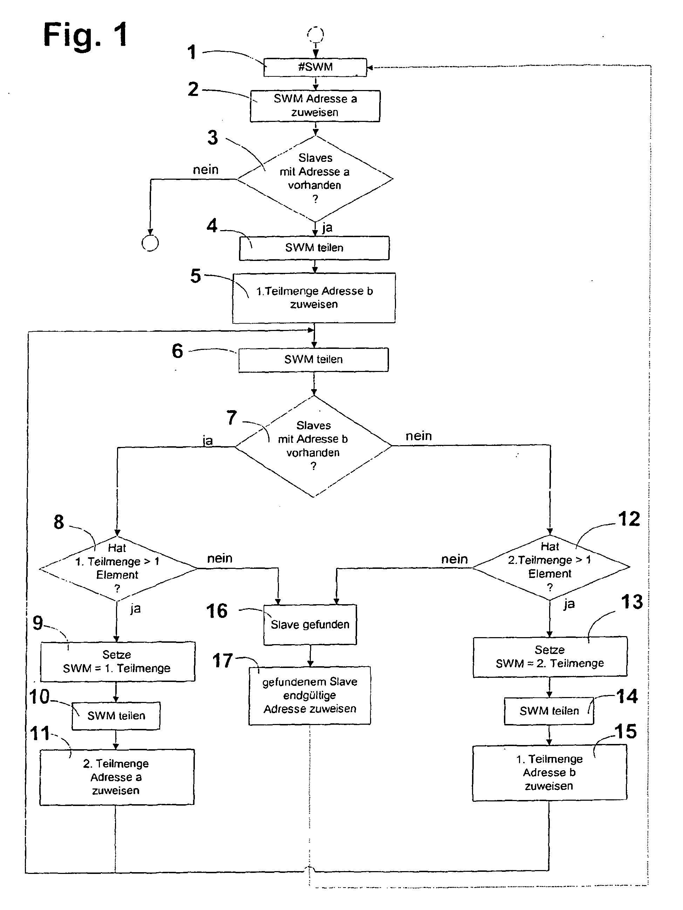

Im ersten Schritt 1 des Verfahrens von Fig. 1 wird diese endliche Wertemenge als die Such-Wertemenge festgelegt, in der im folgenden nach Slave-Geräten gesucht wird, deren Eigenschaft einen der Werte der Such-Wertemenge entspricht.

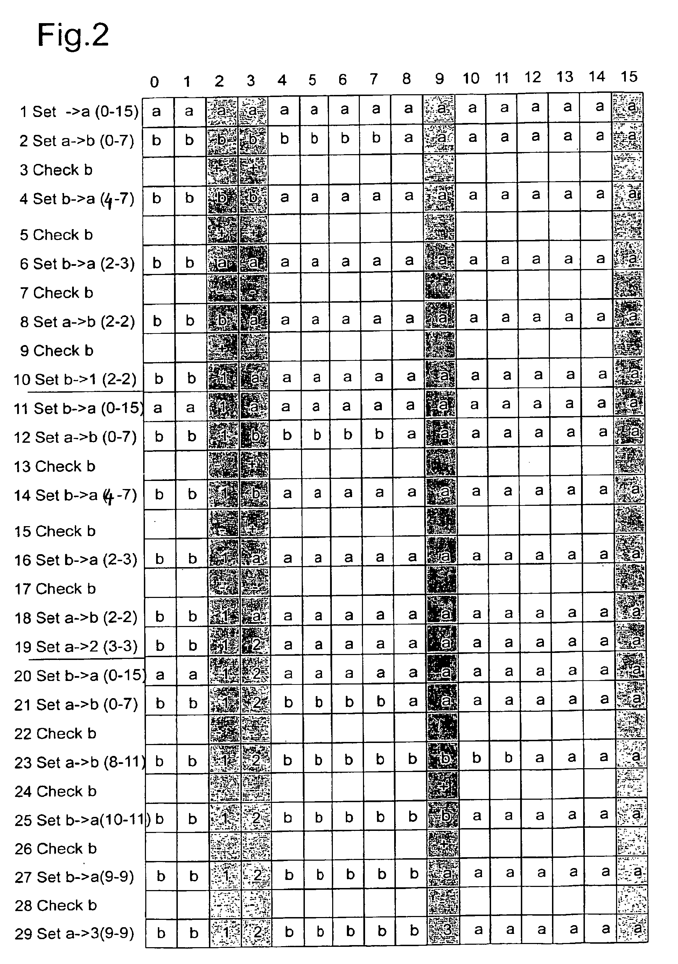

In Schritt 2 gibt das Master-Gerät einen Adressen-Zuweisungsbefehl, in Zeile 1 von Fig. 2 als "Set → a (0-15)" aus, mit dem allen Slave-Geräten des Netzwerks, bei denen der Wert der Eigenschaft zwischen 0 und 15 einschließlich liegt, die Adresse a zugewiesen wird.

Falls das Verfahren nur auf einzelne Slave-Geräte in einem DV-Netzwerk angewendet werden soll, in dem anderen Slave-Geräten bereits Adressen zugewiesen sind, so kann statt dessen ein Befehl "Set d → a (0-15)" verwendet werden, wobei d eine Default-Adresse bezeichnet, die bei den Slave-Geräten, denen Adressen zugewiesen werden sollen, standardmäßig eingestellt ist, und die von den an die anderen Slave-Geräte vergebenen Adressen verschieden ist. Wenn das DV-Netzwerk ein Profibus-Netzwerk ist, so hat diese Default-Adresse d im allgemeinen den Wert 126. Die Adresse a kann den Wert 125 oder einen beliebigen anderen, in dem DV-Netzwerk nicht anderweitig vergebenen Wert haben.

Wenn nicht bekannt ist, welche Adressen an den Slave-Geräten eingestellt sind, können auch die Adressen aller Slave-Geräte des DV-Netzwerks durch Wiederholen des Befehls "Set d → a (0-15)" einheitlich auf a gesetzt werden, um sie dann mit dem unten beschriebenen Verfahren neu zuzuweisen.

Fakultativ kann in Schritt 3 überprüft werden, ob Slaves vorhanden sind, die nun die Adresse a aufweisen. Wenn dies nicht der Fall ist, bricht das Verfahren ab; wenn solche Slaves vorhanden sind, wird in Schritt 4 die Such-Wertemenge geteilt, vorzugsweise in zwei Teile gleicher Größe. Bei dem in Fig. 2 betrachteten Beispiel erfolgt die Teilung in eine erste Teilmenge mit den Elementen {0, 1, ..., 7} und eine zweite Teilmenge mit den Elementen {8, 9, ..., 15}. Der ersten Teilmenge wird eine neue Adresse b, z.B. mit dem Wert 124, in Schritt 5 zugewiesen. Die zweite Zeile von Fig. 2 zeigt die aus der Durchführung eines solchen Befehls "Set a → b (0-7)" resultierende Adressenverteilung. In Schritt 6 wird die Such-Wertemenge geteilt.

In Schritt 7 sendet das Master-Gerät einen Prüfbefehl "Check b", der von allen Slave-Geräten mit der Adresse b mit einer Rückmeldung beantwortet wird. Da die Slave-Geräte mit den Eigenschaftswerten 2 und 3 die Adresse b haben, verzweigt das Verfahren zu Schritt 8, in dem geprüft wird, ob die erste Teilmenge mehr als ein Element enthält. Dies ist hier der Fall, deswegen geht das Verfahren über zu Schritt 9, in dem die erste Teilmenge mit den Werten 0 bis 7 als Such-Wertemenge definiert wird. In Schritt 11 wird der 2. Teilmenge wird die Adresse zugewiesen. Anschließend kehrt das Verfahren zurück zu Schritt 6, wo eine erneute Teilung dieser Such-Wertemenge vorgenommen wird, diesmal in die Teilmengen {0, 1, 2, 3} und {4, 5, 6, 7}. Die Wiederholung des Schritte 6, 7 (entsprechend den Zeile 5 in Fig. 2) ergibt, dass weiterhin wenigstens ein Slave-Gerät mit der Adresse b vorhanden ist; da die Such-Wertemenge immer noch mehr als ein Element enthält, werden die Schritte 9 bis 11 erneut durchlaufen (entsprechend den Zeilen 6, 7 in Fig. 2). In diesem Fall ergibt die Überprüfung von Schritt 7 (Zeile7), dass in der resultierenden 1. Teilmenge {0, 1} kein Slave-Gerät mit Adresse b mehr vorhanden ist. Das Verfahren verzweigt daher zu Schritt 12, in dem geprüft wird, ob die zweite Teilmenge, hier die Menge {2, 3}, mehr als ein Element umfasst. Da dies hier der Fall ist, wird in Schritt 13 die zweite Teilmenge {2, 3} zur Such-Wertemenge definiert, woraus Teilmengen {2} und {3} resultieren. Der nunmehrigen ersten Teilmenge {2} wird in Schritt 15 die Adresse b zugewiesen (Zeile 8). In diesem Fall wird in Schritt 7 wieder ein Slave-Gerät mit Adresse b gefunden (Zeile 9 in Fig. 2); da die erste Teilmenge aber nur noch ein Element, nämlich {2} enthält, wird diesmal von Schritt 8 zu Schritt 16 verzweigt, wo das Master-Gerät erkennt, dass ein Slave-Gerät mit dem Eigenschaftswert 2 vorhanden ist und diesem mit einem Befehl "Set b → 1 (2-2)" die Adresse 1 zuweist (Schritt 17, Zeile 10 in Fig. 2).

Wenn mehr als eine Slave-Adresse zuzuweisen ist, kehrt das Verfahren von hier wieder zum Schritt 2 zurück, in dem allen noch nicht gefundenen Slave-Geräten mit dem Befehl "Set b → a (0-15)" (Zeile 11 in Fig. 2) wieder die Adresse a zugewiesen wird. Das Slave-Gerät mit dem Eigenschaftswert 2 ist von diesem Befehl wohlgemerkt nicht betroffen; da es nicht mehr die Adresse b hat, wird es von diesem Befehl nicht angesprochen.

Durch Wiederholen des Verfahrens in analoger Weise wie oben beschrieben werden sukzessive auch die Slave-Geräte mit den Eigenschaftswerten 3, 9, 15 gefunden und bekommen Adressen 2, 3, ... zugewiesen. Diese Wiederholungen werden hier nicht mehr im Detail beschrieben; die vom Master-Gerät gesendeten Befehle sind für den Fall der Slave-Geräte mit den Eigenschaftswerten 3 und 9 in Fig. 2 gezeigt.

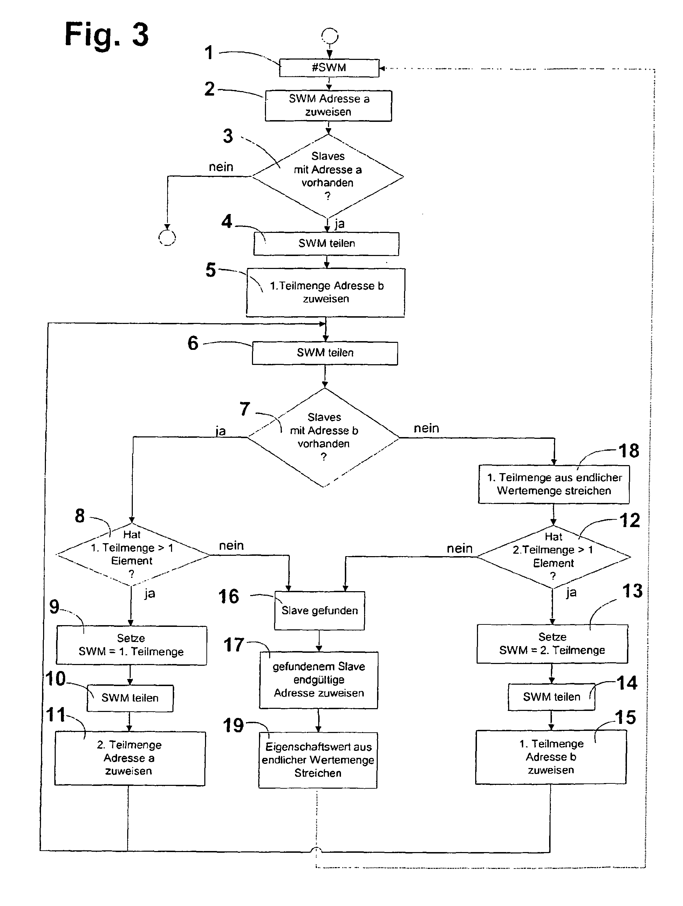

Fig. 3 zeigt ein Flussdiagramm einer Abwandlung des Verfahrens von Fig. 1; es unterscheidet sich von ersterem durch einen zwischen die Schritte 7 und 12 eingeschobenen Schritt 18 des Streichens der Elemente der ersten Teilmenge aus der endlichen Wertemenge und einen Schritt 19 des Streichens des Eigenschaftswertes eines in dem vorhergehenden Schritt 16 gefundenen Slave-Geräts aus der endlichen Wertemenge.

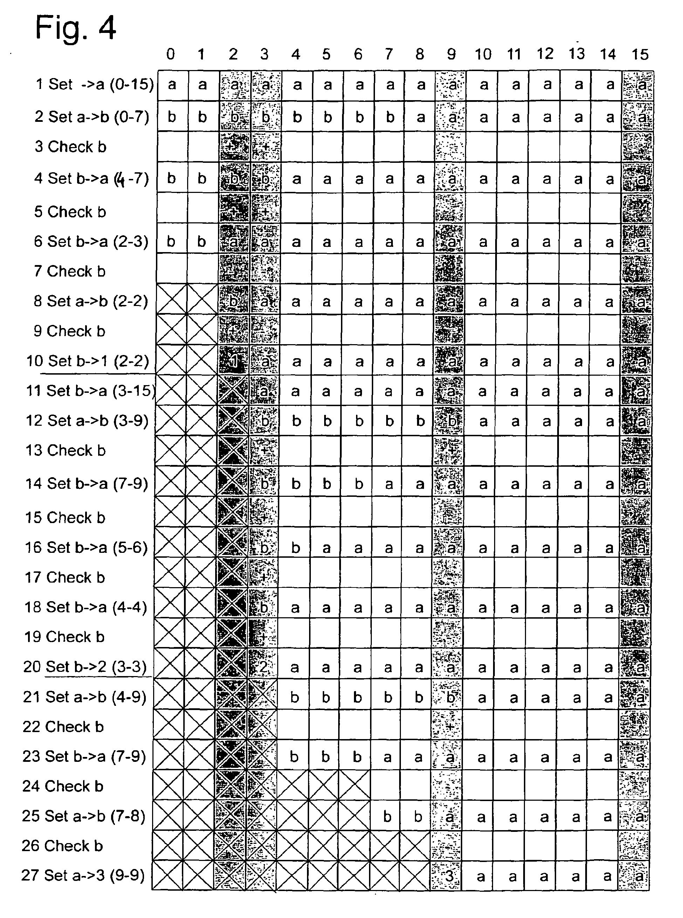

Fig. 4 zeigt die nach diesem Verfahren vom Master-Gerät gesendeten Befehle und die aus diesen resultierende Zuordnung der Adressen an die einzelnen Slave-Geräte. Bis zur Zeile 7 unterscheidet sich Fig. 4 nicht von Fig. 2. Bei der Prüfung der Zeile 7 (Schritt 7) erkennt das Master-Gerät, dass den Eigenschaftswerten 0 und 1 keine Slave-Geräte entsprechen können, und streicht daher in Schritt 18 diese Eigenschaftswerte aus der endlichen Wertemenge. Dies ist in der Fig. als durchgekreuzte Kästchen in den Spalten der Eigenschaftswerte 0 und 1 dargestellt. Für das Finden des Slave-Geräts mit dem Eigenschaftswert 2 bleibt diese Streichung völlig ohne Auswirkungen.

Nach Zuweisung der Adresse 1 an das Slave-Gerät mit dem Eigenschaftswert 2 (Zeile 10 in Fig. 4) wird in Schritt 19 auch der Eigenschaftswert 2 aus der endlichen Wertemenge gestrichen, so dass diese in Zeile 11 von Fig. 4 nur noch die Elemente 3 bis 15 enthält.

Zum Finden des Slave-Geräts mit dem Eigenschaftswert 3 sind wie im Falle des Verfahrens nach Figs. 1 und 2 vier Schritte 6 des Unterteilens der Such-Wertemenge erforderlich. Es sind nicht mehr bei jeder Unterteilung die resultierenden Teilmengen gleich groß, bei der hier betrachteten Ausgestaltung wird in einem solchen Fall die erste Teilmenge um 1 größer als die zweite gewählt.

Durch Finden des Slave-Geräts mit dem Eigenschaftswert 3 reduziert sich die endliche Wertemenge auf {4, 5, ..., 15}, und die Zahl der zum Finden des Slave-Geräts mit dem Eigenschaftswert 9 erforderlichen Unterteilungen der Such-Wertemenge reduziert sich auf 3. Für die in Fig. 4 nicht mehr dargestellte Suche nach dem Slave-Gerät mit dem Eigenschaftswert 15 würden zwei Unterteilungen ausreichen.

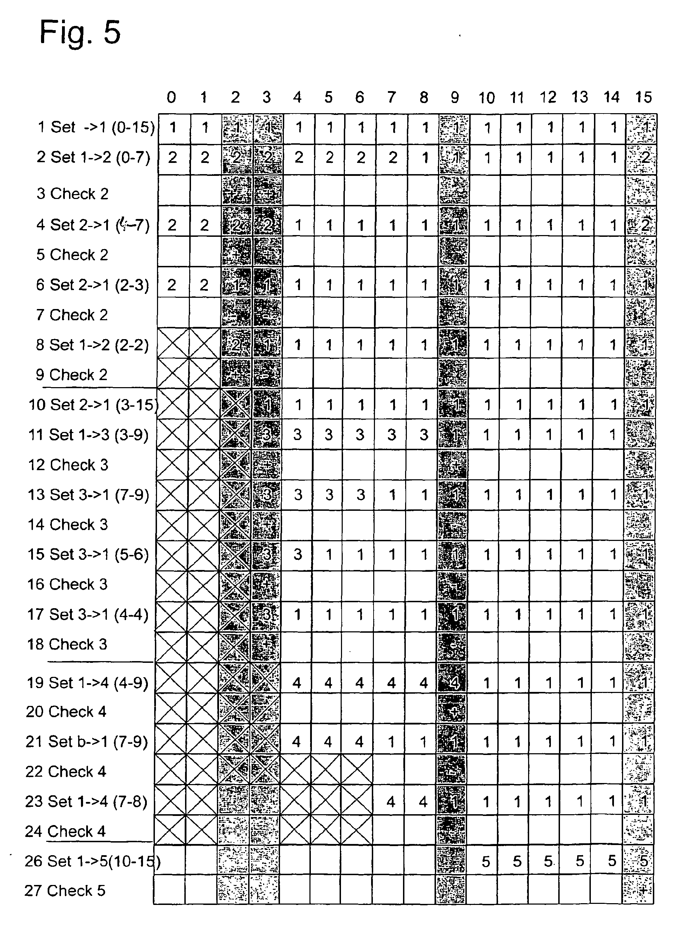

Die in Fig. 5 gezeigte Befehlsfolge unterscheidet sich von der der Fig. 4 durch die Werte der darin zugewiesenen Adressen. Anstelle temporärer Adressen a, b werden von vornherein endgültige Adressen 1, 2 verwendet. Das Endgerät mit dem Eigenschaftswert 2 erhält auf diese Weise die Adresse 2, und der Schritt 17 des Zuweisens der endgültigen Adresse entfällt. Die Adresse 2 wird nun vom Master-Gerät als nicht mehr verfügbar gekennzeichnet, und für die Suche nach dem Eigenschaftswert des nächsten Slave-Geräts wird zunächst wieder in Schritt 2 (Zeile 10 von Fig. 5) allen Slave-Geräten mit Eigenschaftswerten in der reduzierten Such-Wertemenge {3, 4, ..., 15} die Adresse 1 zugewiesen. Nach der Unterteilung der Such-Wertemenge (Schritt 4) wird jedoch als neue Adresse der ersten Teilmenge in Schritt 5 die noch nicht vergebene Adresse 3 eingeführt (Zeile 11). Das Slave-Gerät mit dem Eigenschaftswert 3 erhält auf diese Weise die Adresse 3. Wie sich aus Fig. 5 weiter ergibt, fällt dem Slave-Gerät mit dem Eigenschaftswert 9 die Adresse 1 zu; und die Suche nach dem Slave-Gerät mit dem Eigenschaftswert 15 findet unter Verwendung von Adressen 4 und 5 statt.

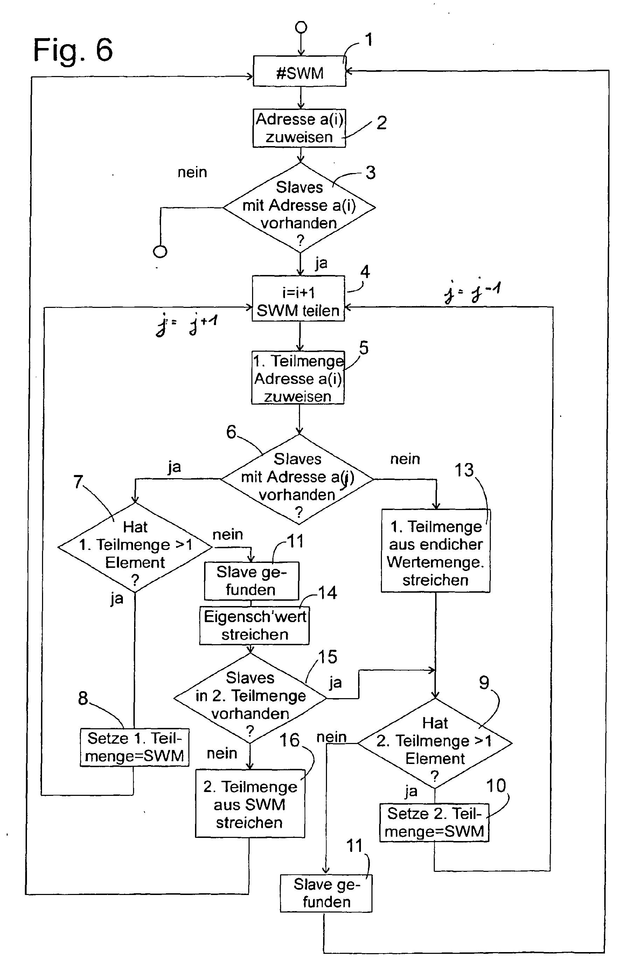

Fig. 6 zeigt ein Flussdiagramm eines abgewandelten Verfahrens, bei dem mehr als zwei unterschiedliche Adressen gleichzeitig in der Such-Wertemenge verwendet werden können. Die Adressen können z.B. in Form eines Vektors a(i), i=0, 1, ..., gehandhabt werden. Die Schritte 1 bis 3 sind die gleichen wie bei den zuvor beschriebenen Verfahren, lediglich die Bezeichnung a der Adresse ist in der Fig. durch a(i) ersetzt.

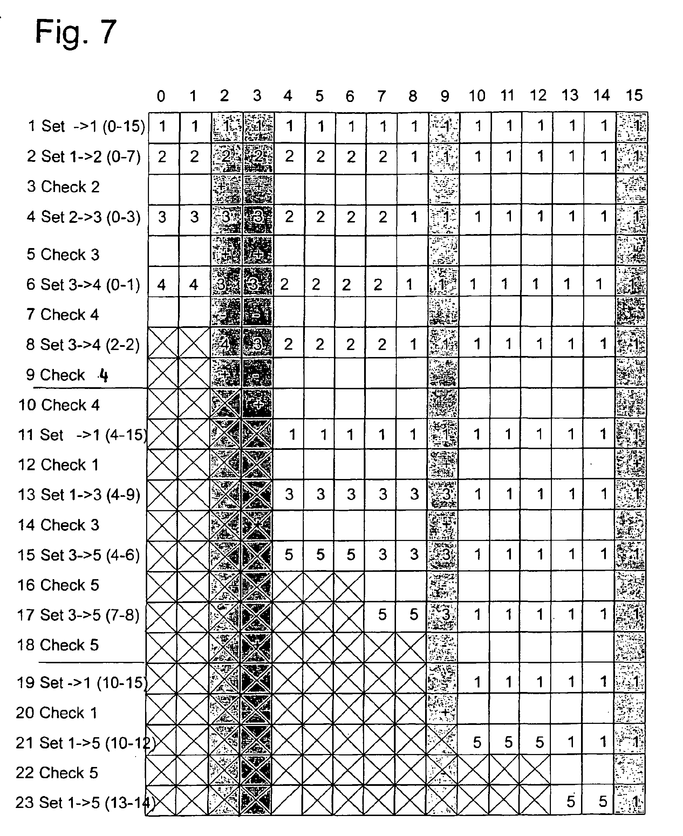

Fig. 7 zeigt die Folge der vom Master-Gerät bei der Durchführung des Verfahrens aus Fig. 6 gesendeten Befehle.

In Fig. 7 wird angenommen, dass a(0)=1 ist. Jede Wiederholung des Schritts 4 ist begleitet von einer Inkrementierung von i um 1. Dementsprechend wird bei der ersten Durchführung des Schritts 5, entsprechend Zeile 2 von Fig. 7, die Adresse a(1) zugewiesen, für die das Master-Gerät den Wert 2 gewählt hat. Die Überprüfung von Schritt 6 (Zeile 3) ergibt, dass Slaves mit Adresse 2 vorhanden sind, woraufhin in Schritt 7 die Zahl der Elemente der ersten Teilmenge geprüft wird, und wie bei den zuvor betrachteten Ausführungsbeispielen zunächst über Schritt 8 zu Schritt 4 zurückgekehrt wird. Hier wird i=2 gesetzt, und bei der Wiederholung von Schritt 5 wird der nun aus {0, 1, 2, 3} bestehenden ersten Teilmenge die Adresse a(2)=3 zugewiesen (Zeile 4). Nach einer weiteren Wiederholung der Schritte 6, 7, 8, 4 hat sich die erste Teilmenge auf die Elemente {0, 1} reduziert, die nun die Adresse a(3)=4 erhalten (Zeile 6). In Schritt 6 (Zeile 7) wird festgestellt, dass keine Slave-Geräte mit dieser Adresse vorhanden sind, und das Verfahren geht über zu Schritt 13, in dem die Elemente {0, 1} aus der endlichen Wertemenge gestrichen werden.

Die zweite Teilmenge {2, 3} umfasst immer noch zwei Elemente, so dass im nachfolgenden Schritt 9 zu Schritt 10 verzweigt wird, wo die zweite Teilmenge als Such-Wertemenge gesetzt wird, und zu Schritt 4 zurückgekehrt wird. Dort erhält i den Wert "4", d.h. das Master-Gerät wählt als Adresswert a(4) wieder den Wert 4, da dieser Adresswert keinem Element der endlichen Wertemenge mehr zugeordnet ist und somit wieder zur Verfügung steht, und weist ihn der ersten Teilmenge, bestehend aus dem Element "2" zu (Schritt 5 bzw. Zeile 8).

Wie man anhand von Zeile 9 der Fig. 7 leicht erkennt, geht das Verfahren anschließend von Schritt 6 zu Schritt 7 und von dort zu Schritt 11 über, wo das Master-Gerät feststellt, dass ein Slave mit dem Eigenschaftswert "2" vorhanden ist und die Adresse "4" erhalten hat.

Der Eigenschaftswert "2" wird in Schritt 14 aus der endlichen Wertemenge gestrichen.

Anschließend wird in Schritt 15 überprüft, ob Slaves mit der der zweiten Teilmenge ursprünglich zugewiesenen Adresse a(2)=3 vorhanden sind. Da dies der Fall ist, geht das Verfahren über zum Schritt 9, stellt fest, dass die zweite Teilmenge nur das Element "3" enthält, und es wird festgestellt, dass ein Slave-Gerät mit dem Eigenschaftswert "3" vorhanden ist und die Adresse 3 erhalten hat, wonach das Verfahren zu Schritt 1 zurückkehrt.

Wenn die Prüfung in Schritt 15 ergäbe, dass die zweite Teilmenge keine Adressen existierender Slave-Geräte enthält, so würde die zweite Teilmenge aus der endlichen Wertemenge in Schritt 16 gestrichen, bevor das Verfahren zu Schritt 1 zurückkehrt.

In Schritt 1 wird die verbliebene endliche Wertemenge {4, 5, ..., 15} als Such-Wertemenge gesetzt. In Schritt 2 wird wiederum eine Adresse a(0) zugewiesen, die unter den noch verfügbaren Adressen ausgewählt ist, im Falle von Zeile 11 der Fig. 7 die Adresse 1. Ab hier wiederholt sich das Verfahren in analoger Weise wie oben bereits beschrieben, so dass die Suche nach den Slave-Geräten mit den Eigenschaftswerten 9 und 15 hier nicht im Detail beschrieben zu werden braucht; die vom Master-Gerät hierfür verwendeten Befehle und ihre Auswirkungen sind in Fig. 7 gezeigt.

Ein bevorzugtes Anwendungsgebiet der vorliegenden Erfindung sind DV-Systeme nach der Profibus-Norm; es liegt aber auf der Hand, dass das erfindungsgemäße Verfahren auch bei anderen Systemen anwendbar ist, sofern diese Adresszuweisungsbefehle unterstützen, die die Übermittlung von begleitenden Parametern zulassen, anhand derer ein Slave-Gerät, das einen solchen Adresszuweisungsbefehl empfängt, entscheiden kann, ob es die Zuweisung durchführt oder nicht.

## Patentansprüche

1. Verfahren zur automatischen Zuweisung wenigstens einer Slave-Adresse in einem Datenverarbeitungsnetzwerk mit einem Master-Gerät und wenigstens einem Slave-Gerät, bei dem die Slave-Geräte eine individualisierende Eigenschaft aufweisen, die für jedes Slave-Gerät einen anderen Wert aus einer endlichen Wertemenge hat, **gekennzeichnet durch** die Schritte:
a) Setzen der genannten endlichen Wertemenge als eine Such-Wertemenge (1),
b) Aufteilen der Suchwertemenge in wenigstens zwei Teilmengen (4, 6) und Zuweisen von Adressen an die Slave-Geräte (5), so dass nach dem Zuweisen alle Slave-Geräte, bei denen der Wert der individualisierenden Eigenschaft in der ersten Teilmenge liegt, eine erste Adresse (b) haben, und alle Slave-Geräte, bei denen der Wert der individualisierenden Eigenschaft in der zweiten Teilmenge liegt, eine zweite Adresse (a) haben;
c) die Such-Wertemenge teilen in wenigstens zwei Teilmengen (6) und überprüfen (7), ob wenigstens ein Slave-Gerät existiert, das mit der ersten Adresse (b) adressiert ist;
d) wenn ja, die erste Teilmenge als Such-Wertemenge setzen (9), die Such-Wertemenge teilen (10) und an die zweite Teilmenge Adresse (a) zuweisen (11), Zurückkehren zu Schritt c).
e) Wenn nein, die zweite Teilmenge als Such-Wertemenge setzen (13), Such-Wertemenge teilen (14) und an die erste Teilmenge Adresse (b) zuweisen (15), Zurückkehren zu Schritt c).

2. Verfahren nach Anspruch 1, **dadurch gekennzeichnet, dass** die Such-Wertemenge in genau zwei Teilmengen aufgeteilt wird.

3. Verfahren nach Anspruch 1 oder 2, **dadurch gekennzeichnet, dass** wenn in Schritt d) die erste Teilmenge oder in Schritt e) die zweite Teilmengegenau ein Element enthält, dem Slave-Gerät, bei dem der Wert der individualisierenden Eigenschaft diesem Element entspricht, eine endgültige Adresse zugewiesen wird (17),

4. Verfahren nach einem der vorhergehenden Ansprüche, **dadurch gekennzeichnet, dass** bei jeder Wiederholung von Schritt c) (6) identische Werte der ersten und der zweiten Adresse verwendet werden.

5. Verfahren nach Anspruch 1, 2 oder 3, **dadurch gekennzeichnet, dass** bei jeder Wiederholung von Schritt d) (15) oder e) (11) wenigstens ein Wert für die erste und / oder die zweite Adresse eingeführt wird, der keinem Element der Such-Wertemenge zugeordnet ist.

6. Verfahren nach Anspruch 5, **dadurch gekennzeichnet, dass** wenn in Schritt c) die erste Teilmengegenau ein Element enthält, ferner überprüft wird (15), ob wenigstens ein Slave existiert, der mit der zweiten Adresse adressierbar ist, und dass, wenn ja und wenn die zweite Teilmenge mehr als ein Element enthält, die zweite Teilmenge als Such-Wertemenge gesetzt (10) wird und zu Schritt b) zurückgekehrt wird.

7. Verfahren nach einem der vorhergehenden Ansprüche, **dadurch gekennzeichnet, dass** wenn die Überprüfung in Schritt c) (7) ergibt, dass kein Slave-Gerät mit der ersten Adresse adressierbar ist, die Elemente der ersten Teilmenge aus der endlichen Wertemenge gestrichen werden (18).

8. Verfahren nach einem der vorhergehenden Ansprüche, **dadurch gekennzeichnet, dass** ein Element der endlichen Wertemenge, zu dem ein Slave-Gerät gefunden worden ist, aus der endlichen Wertemenge gestrichen wird (19).

9. Master-Gerät für ein Datenverarbeitungsnetzwerk, **dadurch gekennzeichnet, dass** es eingerichtet ist, das Verfahren nach einem der vorhergehenden Ansprüche durchzuführen.

10. Datenverarbeitungsnetzwerk mit einem Master-Gerät nach Anspruch 9 und wenigstens einem Slave-Gerät.

## Claims

1. A process for the automatic assignment of at least one slave address in a data processing network comprising a master device and at least one slave device, in which the slave devices exhibit a unique property, which for each slave device has a different value from a finite value set, **characterised by** the following steps:
a) setting the said finite value set as a search value set (1),
b) dividing the search value set into at least two subsets (4, 6) and assigning addresses to the slave devices (5), so that after the assignment all slave devices for which the value of the unique property lies in the first subset have a first address (b), and all slave devices for which the value of the unique property lies in the second subset have a second address (a);
c) dividing the search value set into at least two subsets (6) and checking (7) whether there exists at least one slave device that is addressed with the first address (b),
d) if so, setting the first subset as the search value set (9), dividing the search value set (10) and assigning address (a) to the second subset (11), returning to step c),
e) if not, setting the second subset as the search value set (13), dividing the search value set (14) and assigning address (b) to the first subset (15), returning to step c).

2. A process according to Claim 1,
**characterised in that** the search value set is divided into exactly two subsets.

3. A process according to Claim 1 or 2,
**characterised in that** if in step d) the first subset or in step e) the second subset contains precisely one element, a final address (17) is assigned to the slave device in which the value of the unique property value corresponds to said element.

4. A process according to one of the preceding Claims,
**characterised in that** for each repetition of step c) (6) identical values are used for the first and second address.

5. A process according to Claim 1, 2, or 3
**characterised in that** for each repetition of step d) (15) or e) (11) at least one value which is not assigned to any element of the search value set is introduced for the first and/or second address.

6. A process according to Claim 5,
**characterised in that** if in step c) the first subset contains precisely one element a further check will be made (15) to establish whether at least one slave exists that can be addressed with the second address,
**and in that** if this is the case and if the second subset contains more than one element, then the second subset is set as the search value set (10) and the process returns to step b).

7. A process according to one of the preceding Claims,
**characterised in that** if the check in step c) (7) shows that no slave device can be addressed with the first address, the elements of the first subset are deleted from the finite value set (18).

8. A process according to one of the preceding Claims,
**characterised in that** one element of the finite value set, for which a slave device has been found, is deleted from the finite value set (19).

9. A master device for a data processing network,
**characterised in that** said device is set up so as to perform the process according to one of the preceding claims.

10. A data processing network comprising a master device according to Claim 9 and at least one slave device.

## Revendications

1. Procédé d'attribution automatique d'au moins une adresse esclave dans un réseau de traitement de données avec un appareil maître et au moins un appareil esclave, dans lequel les appareils esclaves présentent une caractéristique individualisante qui pour chaque appareil esclave a une autre valeur d'une quantité de valeurs définie,
**caractérisé par**
les étapes:
a) placement de la quantité de valeurs finie citée comme quantité de valeurs de recherche (1),
b) subdivision de la quantité de valeurs de recherche en au moins deux quantités partielles (4, 6) et attribution d'adresses aux appareils esclaves (5) de telle sorte qu'après l'attribution tous les appareils esclaves dont la valeur de la caractéristique individualisante se situe dans la première quantité partielle aient une première adresse (b), et tous les appareils esclaves dont la valeur de la caractéristique individualisante se situe dans la deuxième quantité partielle aient une deuxième adresse (a);
c) subdivision (6) de la quantité de valeurs de recherche en au moins deux quantités partielles et vérification (7) s'il existe au moins un appareil esclave adressé avec la première adresse (b) ;
d) si oui, placer (9) la première quantité partielle comme quantité de valeurs de recherche, subdiviser (10) la quantité de valeurs de recherche, et attribuer (11) l'adresse (a) à la deuxième quantité partielle, retour à l'étape c).
e) si non, placer (13) la deuxième quantité partielle comme quantité de valeurs de recherche, subdiviser (14) la quantité de valeurs de recherche, et attribuer (15) l'adresse (b) à la première quantité partielle, retour à l'étape c).

2. Procédé selon la revendication 1,
**caractérisé en ce que**
la quantité de valeurs de recherche est subdivisée précisément en deux quantités partielles.

3. Procédé selon la revendication 1 ou 2,
**caractérisé en ce que**
si à l'étape d) la première quantité partielle ou à l'étape e) la deuxième quantité partielle contient précisément un élément, on attribue (17) une adresse définitive à l'appareil esclave dont la valeur de la caractéristique individualisante correspond à cet élément.

4. Procédé selon l'une des revendications précédentes,
**caractérisé en ce que**
lors de chaque répétition de l'étape c) (6) on utilise des valeurs identiques de la première et de la deuxième adresses.

5. Procédé selon la revendication 1, 2 ou 3,
**caractérisé en ce que**
lors de chaque répétition de l'étape d) (15) ou e) (11) on introduit au moins une valeur pour la première et/ou la deuxième adresse, qui n'est pas associée à un élément de la quantité de valeurs de recherche.

6. Procédé selon la revendication 5,
**caractérisé en ce que**
si à l'étape c) la première quantité partielle contient précisément un élément, on vérifie (15) en outre si au moins un esclave existe qui peut être adressé avec la deuxième adresse, et si c'est le cas et la deuxième quantité partielle contient plus qu'un élément, on place (10) la deuxième quantité partielle comme quantité de valeurs de recherche et retourne à l'étape b).

7. Procédé selon l'une des revendications précédentes,
**caractérisé en ce que**
si la vérification à l'étape c) (7) donne qu'aucun appareil esclave ne peut être adressé avec la première adresse, on supprime (18) les éléments de la première quantité partielle de la quantité de valeurs finie.

8. Procédé selon l'une des revendications précédentes,
**caractérisé en ce qu'**
un élément de la quantité de valeurs finie pour lequel un appareil esclave a été trouvé est supprimé (19) de la quantité de valeurs finie.

9. Appareil maître pour un réseau de traitement de données,
**caractérisé en ce qu'**
il est installé pour exécuter le procédé selon l'une des revendications précédentes.

10. Réseau de traitement de données avec un appareil maître selon la revendication 9 et au moins un appareil esclave.
